# EUROPEAN PATENT SPECIFICATION

(11) **EP 1 849 365 B1**
(45) Date of publication and mention of the grant of the patent: **07.11.2018**
(21) Application number: 07251697.4
(22) Date of filing: 23.04.2007
(51) Int. Cl.: A21B 1/40, A21B 1/44, F24C 7/08

(54) **Oven control**
Ofensteuerung
Commande de four

(30) Priority: 24.04.2006 AU 2006902133
(43) Date of publication of application: 31.10.2007
(73) Proprietor: Moffat Pty Limited, Mulgrave, Victoria 3170 (AU)
(72) Inventor: Willett, Paul Eaton, Whiteside, Queensland 4503 (AU)
(74) Representative: Williams, David John

(56) References cited:
- GB-A- 2 380 923
- US-A- 4 390 965
- US-A1- 2003 047 553
- US-B1- 6 559 427

## Description

### Field of the invention

The present invention relates generally to control systems for monitoring and controlling multiple ovens. The invention is particularly suitable for deck ovens comprising multiple oven chambers, and it will be convenient to describe the invention in relation to that exemplary but non-limiting application.

### Background of the invention

Multiple chamber deck ovens are well known and widely utilised by users. Such ovens may comprise a single heating means connected to several oven chambers, stacked vertically on top of each other or several oven chambers vertically stacked with each having separate heating means. Each oven chamber in the deck oven is provided with an individual control system displaying information about that particular chamber (e.g. temperature, bake time remaining, etc) and allowing a user to control the chamber (e.g. adjust the temperature, set a timer, control the input of steam into the chamber etc.).

Being able to separately control each oven chamber is essential, as it allows each oven chamber to be treated as an individual oven. This independent control, for example, allows a user to have one oven chamber set at a high temperature for baking one product while an adjacent chamber is set at a different temperature (of even turned off) for baking a separate product.

Generally speaking, baking a new product involves preparing the dough (which, depending on the product being made may need to be baked shortly after being prepared or may need to sit and prove for a period of time between preparation and baking), placing the bake into an oven chamber, monitoring the bake to prevent accidental burning, and removing a completed bake from the appropriate chamber.

Management of these activities in respect of deck ovens, especially large deck ovens (some deck ovens include up to 12 independently operable chambers), where each chamber of the oven is potentially at a different temperature and/or different stage in a current bake, becomes quite complicated and is often done inefficiently.

Despite each oven having a bake time all reading different elapsed times, during typical operation, a baker habitually opens the oven doors to constantly visually check the progress of the bake. The complications are further exacerbated by the fact that the vertical arrangement of the deck oven itself generally prevents more than one person interacting with the oven at a time.

GB 2380923 discloses a multi-deck bakery oven. A monitoring system discloses the temperature and other variables associated with each of a plurality of ovens.

### Summary of the invention

In one aspect, there is provided a monitoring and advisory system according to claim 1.

Thus a monitoring and advisory system for a plurality of ovens is described, including:
a means for receiving information from the plurality of ovens on the current conditions in each oven and the usage of each oven;
processor means for determining and identifying which of the plurality of ovens meets a predetermined condition, based on the information received from the plurality of ovens on the current conditions of the ovens, and forwarding an indication of the identified oven to an output means for interpretation by an operator.

The determination and identification may be provided in response to an operator inputting certain information through a user interface and the processor means determining the required conditions of the oven from the information. The processor then identifies the next available oven which most closely resembles the required conditions or is capable of resembling the required conditions within a predetermined or acceptable time period.

The information identifying the oven is then conveyed to the operator preferably by a display means. The display means may also display other information on the conditions or usage of the oven. Alternatively some other form of indicia such as an auditory transmission or other visual indication such as a flashing light may be used to indicate the selected oven.

In another aspect, there is provided a method according to claim 10.

Thus a method of operating a plurality of ovens includes the steps of:
determining the operating conditions of a plurality of ovens; and
determining the operating conditions required for a next available oven;
based on the condition of each of the plurality of ovens, determining and identifying which of the plurality of ovens will meet the required operating condition the fastest within a predetermined time period;
outputting to an operator, the identity of the next available oven.

The condition of the ovens is determined from operating variables of each of the plurality of ovens.

In the preferred form of the invention, information is received on the operating variables of an oven. These variables may include the current temperature of the oven, the time until a bake is finished, the time since baking commenced, whether steam is being applied, the humidity in the oven and whether the heating elements are activated.

All of this information or a selection of this information may be displayed on a display means such as a monitor. In response to an enquiry from the operator, the processor means determines and identifies the oven which is best suited for use. The nature of the enquiry may be the operator providing information on the type of product to be baked such as buns, loaves, cakes, rolls etc. The processor has a look-up table of correlating oven temperatures with the type of product and uses this look-up table to identify an oven which is best suited for receiving the dough to be baked.

The decision is made based on a review of the ovens which are currently not in use and the temperature of each oven. The oven which is at a temperature corresponding to the information derived from the look-up table is identified and that oven selection is conveyed to the operator.

If an available oven is not at the required temperature, then the processor reviews the status of the currently used ovens to obtain the time when one will become available generally from the oven timer and the current temperature of the oven. If the oven is at the required temperature and will be available within a predetermined time period, which may be set by the operator, then the selection of that oven is conveyed to the operator preferably by the display means.

Alternatively or concurrently, the processor may determine the time taken for an oven not at the required temperature to heat up to or cool down to the required temperature. If the time to reach the required temperature is less than the time when an oven at the required temperature becomes available or less than a predetermined time, then that oven is identified and the selection conveyed to the operator with an indicator as to when it is at the required temperature. Preferably there is a warning indicia to warn the operator that the oven is not yet at the required temperature but is the next available oven suitable for the product.

In a further aspect of the invention, a computer program for operating a plurality of ovens is also disclosed.

### Brief description of the drawings

The invention will now be described with reference to the accompanying drawings which show a preferred embodiment of the control system. It is to be understood, however, that the invention is not limited to the features of the preferred embodiment shown in the drawings.
Figure 1 provides a sectional side view of a multiple chamber deck oven;
Figure 2 provides a high level logical representation of the deck oven depicted in Figure 1;
Figure 3 provides a high level logical representation of a deck oven in accordance with an embodiment of the present invention;
Figure 4 provides a logical representation of the components of a control system in accordance with an embodiment of the present invention;
Figure 5 provides an exemplary user interface to the control system of Figure 4; and
Figure 6 provides a decision making flow chart by which the control system may select the best chamber for a new bake.

### Detailed description of the embodiments

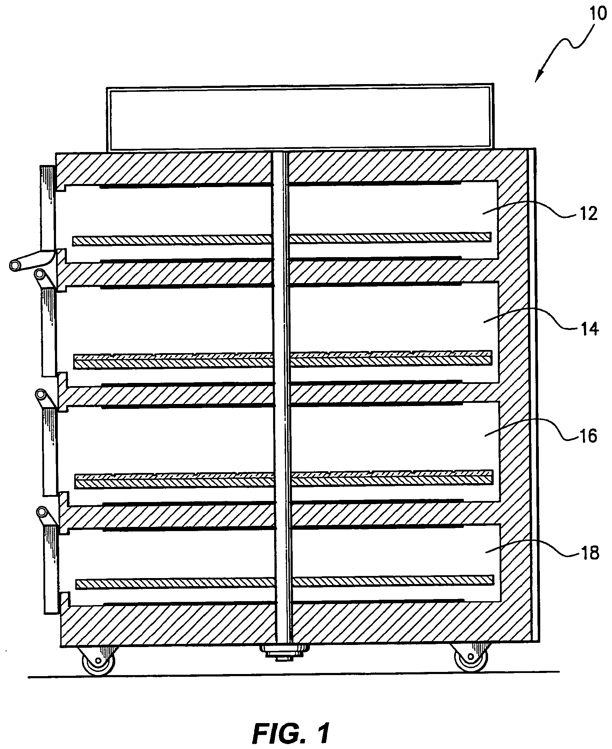

Figure 1 depicts an example of a multiple chamber deck oven 10. This particular deck oven 10 comprises four independent oven chambers 12, 14, 16 and 18, each chamber with its own control system 20, 22, 24 and 26 respectively. The control systems 20, 22, 24 and 26 allow control of the oven 10 (e.g. setting a temperature, setting a timer, controlling steam generation, controlling flue adjustments) and provides details associated with the chamber (e.g. current temperature of the chamber, time elapsed, time remaining) to the user. The oven 10 is also provided with a heating means (not shown in Figure 1) which provides heat to each of the chambers by heating each oven with individual heating elements in each oven. Thus essentially the bank of ovens operates as a collection of individual ovens each operated individually.

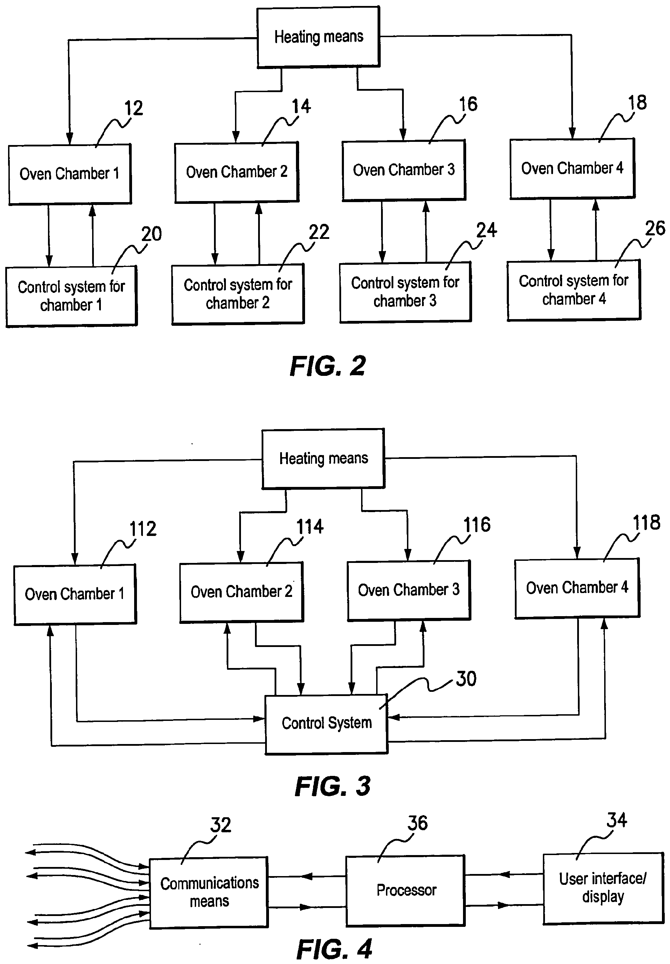

Figure 2 provides a high level logical representation of the deck oven depicted in Figure 1. As can be seen, each oven chamber 12 to 18 communicates individually with its associated control system 20 to 26 and is heated by a common heating means 28. Each control system 20 to 26 receives status information from sensors monitoring the environment of the associated oven chamber 12 to 18 (e.g. the temperature of the chamber), and displays this information to the user. When the user interacts with the control system associated with a particular chamber, for example by setting the temperature, the control system sends control signals to the appropriate chamber to effect the control specified by the user.

For the sake of clarity in the present application status information and control signals are depicted as being sent from and to the individual oven chamber to which those signals relate. It will be appreciated, however, that the signals may be sent to different destinations depending on the control required. For example, a control signal to increase the temperature may be sent to one place, a control signal to introduce steam into the chamber a different place, and a control signal to open a flue to a different place again.

Figure 3 provides a high level logical representation of a deck oven in accordance with one embodiment of the present invention. As can be seen, instead of each oven chamber 112 to 118 being provided with separate control systems, a single control system 30 is provided. The control system 30 is configured to receive status information from, and send control signals to, all oven chambers 112 to 118. The control system 30 may be provided on the deck oven itself or, if desired, may be provided at a remote location so as to leave the face of the deck oven free and allow monitoring and control of the oven chambers from that remote location.

As shown in Figure 4, the control system 30 broadly incorporates a communication means 32 for receiving status information from, and sending control signals to, each of the chambers controlled by the control means 30, a user interface means 34 for displaying information regarding the ovens to a user and allowing the user to input control signals, and a processor means 36 (discussed in detail below). While the three components of the control system 30 must be able to communicate data between each other, there are numerous ways in which they may be connected to do so. For example, the communication means 32 and processor 36 may be hard wired to each other and to the oven chambers being controlled, but the user interface 34 may connect to the processor via a wireless connection allowing the monitoring of the status of the ovens and the control of the ovens to be achieved from a remote location (for example, the ovens may be in a baking room but may be controlled and monitored by a user from a shop counter).

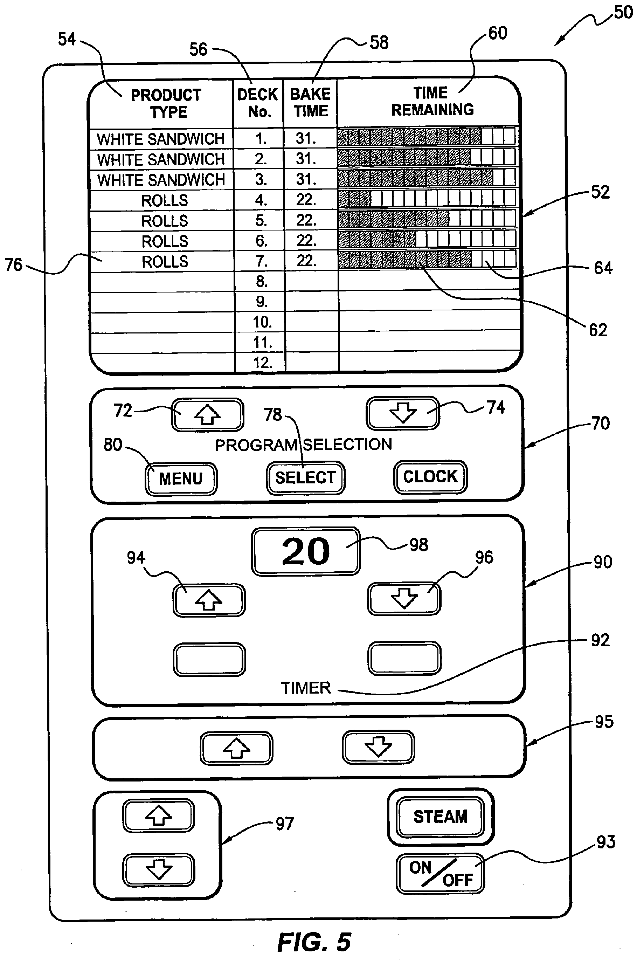

Figure 5 depicts one example of a user interface 50 that may be provided in order to monitor and/or control the chambers being controlled by the control system 30. The user interface includes a status display 52 which provides a user with crucial information regarding all of the chambers being controlled at a glance. Each chamber being controlled (in this case 12 of them) is displayed in a list, providing information regarding the product 54 (if anything) currently being baked in a particular oven chamber 56, the minutes of bake time elapsed 58, and a visual representation of the bake time remaining 60. As can be seen, the visual representation of the bake time remaining 60 in respect of each chamber is provided in such a way that a user can see immediately which bakes are close to completion, and therefore which ovens need to be checked and how long it will be until a chamber will be free. To further enhance usability and provide a user with the most crucial information immediately, the visual representation of time remaining is split into a first region 62 and second region 64. The first region 62, displaying to the user, for example, that there is only 5 minutes left for a bake and therefore it must be checked/removed shortly, may be shown in a separate colour (e.g. red) to the second region 64.

Other information may be included in this status display 52 as is deemed necessary or relevant. For example, the display could be adapted to also display information as to the current temperature of each of the chambers.

The user interface 52 also includes various control options for controlling the chambers. The selection panel 70 allows a user scroll through the oven chambers attached to the control system 30 and displayed in the status display 52 in order to select a particular oven chamber to be controlled. The user may scroll up or down through the list of chambers displayed in the status display 52 by activating the up button 72 or down button 74 respectively. To show the user which chamber is currently selected the status display 52 may highlight 76 the selected oven. Once the user has highlighted the chamber they wish to control, they may activate the select button 78 to select that chamber.

Once a chamber has been selected in the selection panel 70, the user may press the menu button 80 to transition between various control options, which are then displayed in the control panel 90. The control option currently active will be displayed in an area 92 at the bottom of the control panel 90. In the present example the option selected is the 'timer' option, allowing a user to control the timer of the oven chamber selected. Other control options include temperature and bake time. By pressing the up button 94 or down button 96 the selected control option (in this case the timer) may be incremented or decremented respectively. The current value for the control option is displayed in box 98 - in Figure 5, box 98 is showing the user that the time remaining on the selected oven is 20 minutes.

The user interface 50 may also include steam controls, including an on/off button 93 to control the presence or absence of steam in the chambers. One set of controls 95 may be used to manually control the release of steam into the chamber, while the other set of controls 97 may be used to manually control the venting of the steam.

If desired, multiple status displays 52 (with or without the other control features of the user interface 50) may be provided. For example, the status display may display on the oven itself as well as on a screen visible from a shop counter or similar so the status of the chambers may be monitored without having to be in the immediate vicinity of the oven.

The processor 36 is configured to receive status information sent from each of the oven chambers (via the communication means 32), display the status information on the user interface 50, and receive control information entered into the user interface 50 by a user and sending appropriate control messages to the correct destination. In addition, the processor 36 is also configured to implement logical rules to assist the user in making baking decisions.

For example, when a new bake is to be undertaken, instead of a user either analysing the user interface 50 to determine which oven is available or, as traditionally has been the case, go to the oven itself to visually inspect the oven chambers, the user may simply enter in the new product which they wish to bake into a user interface. The processor 36 preferably has a look-up table correlating bake time and temperature with the type of product to be baked. From this information, the processor 36 can determine the most appropriate oven for the bake and set the temperature and bake time accordingly.

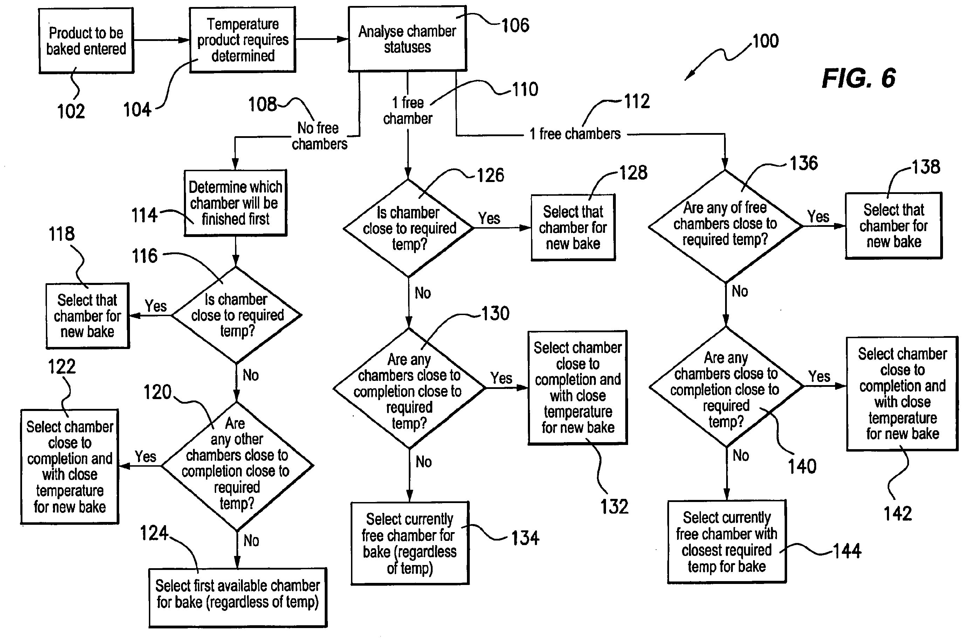

Figure 6 depicts a flow chart of a simplified decision making process 100 that may be employed by the processor 36 in order to select the most appropriate chamber for a new bake. The new product to be baked is entered into the control system 102 which determines the temperature and time required to bake that product 104. The processor 36 then analyses the status of the chambers 106 and determines whether there are no chambers currently free 108 (i.e. all chambers are currently being used), one chamber free 110, or more than one free chamber 112.

If there are currently no oven chambers available, the processor 36 determines which chamber will be the next to become free 114 - i.e. which chamber has the least remaining bake time. If the temperature of the next chamber to become free is close to the temperature required for the new bake 116, that chamber is selected for the new bake 118. If the next chamber to become free is not close to the required temperature for the new bake, the processor 36 determines whether any other chambers will be free at a similar time, and whether any of those chambers are close to the temperature required for the new bake 120 (e.g. the processor determines the next chamber to finish and then looks for chambers that will finish within a predetermined time period, e.g. 5 minutes, from that chamber). If there is a chamber nearing completion that is closer to the required temperature, the processor 36 will select that chamber for the new bake 122. If no other chambers are nearing completion, or there are other chambers nearing completion but they are not close to the required temperature, the processor 36 will select the first chamber due to become available for the new bake 124 (i.e. the initially identified chamber selected in step 118).

For example, it may be the case that the temperature required for the new bake is 200 degrees, the first chamber that will become free is currently at a temperature of 150 degrees, and there is a second chamber that will become free 1 minute after the first chamber which is currently at a temperature of 200 degrees. In this case the processor will determine that the second chamber is to be used for the bake although it is not the first to become free, it will be a better temperature and is therefore the more efficient choice.

If there is one free chamber 110, the processor undertakes a similar decision making process to determine the most appropriate chamber for the new bake. If the free chamber is close to the required temperature it will be selected for the new bake 128. If the chamber isn't close to the required temperature, the processor 36 will analyse the other chambers 130 to determine whether any are close to completion and close to the required temperature. If such a chamber exists the processor 36 selects that chamber for the bake 132 and if not the currently free chamber is selected 134.

If there is more than one chamber free 112, the processor 36 will analyse the temperatures of those free chambers (which may be completely cold or may have just recently been switched off and still be cooling down), to determine whether any are close to the temperature required for the new bake 136. If one of the free chambers is close to the required temperature it is selected for the bake 138. If none of the free chambers are close to the required temperature the processor 36 looks at whether any of the chambers currently in use are close to completion and if so whether any are at a temperature close to the temperature required for the new bake 140. If such a chamber exists the processor 36 selects that chamber for the bake 142 and if not the currently free chamber is selected 144.

Once the processor 36 has selected the chamber to be used for the new bake, it informs the user and, if required, sends control signals to prepare the chamber (e.g. raising the temperature).
While the invention has been described in relation to deck type ovens and a single control system for controlling multiple oven chambers, it will be appreciated that each oven chamber is essentially an oven in its own right, and the control system may easily be adapted to monitor and control any arrangement of such ovens which may be independently controlled.

## Claims

1. A monitoring and advisory system for a plurality of oven chambers (12, 14, 16, 18) during use, including:
a. a processor (36),
b. a connection (20, 22, 24, 26) for connecting to the processor (36) to the plurality of oven chambers for providing information to the processor indicative of one or more current conditions of each of the oven chambers and the time when current usage of each of the oven chambers is complete; and
c. a communication arrangement (32) coupled to the processor; **characterized in that**:
1 the processor (36) is configured to:
(i) determine a desired oven chamber condition for a product to be baked based on information received from an operator;
(ii) determine the current condition of each oven chamber and the time when current usage of each oven chamber is complete;
(iii) determine for each oven chamber, an expected time to reach the desired oven chamber condition once the current usage of the oven chamber is complete (106, 114, 126, 136), the expected time being the sum of time for the oven chamber to complete current usage and the time taken to change the oven chamber conditions to the desired oven once the current usage is complete (116, 120, 130, 140);
(iv) identify the oven chamber with the lowest expected time as the desired oven chamber; (figure 6) and
(v) control the communication arrangement to communicate the identity of the desired oven chamber (124, 128, 132, 134, 138, 142, 144) to the operator, and
d. the communication arrangement is configured to communicate the identity of the desired oven chamber to the operator

2. The system according to claim 1, wherein:
(i) the communication arrangement includes a user interface (50);
(ii) the processor (36) being configured to make the identification of the next available over chamber in response to operator input entered via the user interface (50); and
(iii) the processor (36) determines the desired oven chamber condition from the operator input.

3. The system according to claim 1 or 2, wherein the user interface includes a display.

4. The system according to claim 3, wherein, in addition to displaying the indication of the identified oven chamber, the display also displays other information regarding the current condition and/or usage of each of the oven chambers.

5. The system according to claim 1 or 2, wherein the information of one or more current conditions of each of the oven chambers provided to the processor includes at least one variable selected from the group including the current oven chamber temperature of each of the oven chambers, whether steam is being applied, the humidity of each of the oven chambers and whether the heating elements are activated.

6. The system according to claim 5, wherein the one or more current conditions of each of the oven chambers is current oven chamber temperature of each oven chamber and desired oven chamber condition is desired oven chamber temperature determined by the processor.

7. The system according to claim 2, wherein the operator input includes an indication of a type of product to be baked and the processor is configured to determine the desired oven chamber condition based on the product type.

8. The system according to claim 7, wherein the processor has a look-up table of information of the desired oven conditions corresponding to the type of product to be baked and is configured to use the look-up table to make the determination of the desired oven chamber conditions.

9. The system according to claim 1, further comprising an indicator for displaying when the identified oven chamber is at the desired oven chamber condition.

10. A method of operating a plurality of oven chambers comprising the steps of:
(i) determining a desired oven chamber condition for a product to be baked based on information received from an operator;
(ii) determining the current condition of each oven chamber and the time the current usage of each oven chamber is complete;
(iii) determining for each oven chamber, an expected time to reach the desired oven chamber condition once the current usage of the oven chamber is complete, the expected time being the sum of time for the oven chamber to complete current usage, and the time taken to change the oven conditions to the desired oven once the usage is complete;
(iv) identify the oven chamber with the lowest expected time as the desired oven chamber; and
(v) communicating the identity of the desired oven chamber to the operator.

## Patentansprüche

1. Überwachungs- und Beratungssystem für mehrere Ofenkammern (12, 14, 16, 18) während des Gebrauchs mit:
a. einem Prozessor (36),
b. einer Verbindung (20, 22, 24, 26) zum Verbinden mit dem Prozessor (36) mit den mehreren Ofenkammern zum Versorgen des Prozessors mit Informationen, die eine oder mehr aktuelle Bedingungen von jeder der Ofenkammern und der Zeit, zu der die aktuelle Nutzung von jeder der Ofenkammern abgeschlossen ist, angeben; und
c. eine Kommunikationsanordnung (32), die mit dem Prozessor gekoppelt ist;
**dadurch gekennzeichnet, dass**:
1 der Prozessor (36) konfiguriert ist zum:
(i) Ermitteln einer gewünschten Ofenkammerbedingung für ein zu backendes Produkt auf Basis von von einer Bedienkraft erhaltenen Informationen;
(ii) Ermitteln der aktuellen Bedingung jeder Ofenkammer und der Zeit, zu der die aktuelle Nutzung jeder Ofenkammer abgeschlossen ist;
(iii) für jede Ofenkammer Ermitteln einer erwarteten Zeit zum Erreichen der gewünschten Ofenkammerbedingung, sobald die aktuelle Nutzung der Ofenkammer abgeschlossen ist (106, 114, 126, 136), wobei die erwartete Zeit die Summe der Zeit, bis die Ofenkammer die aktuelle Nutzung abgeschlossen hat, und der zum Ändern der Ofenkammerbedingungen auf den gewünschten Ofen, sobald die aktuelle Nutzung abgeschlossen ist, benötigten Zeit (116, 120, 130, 140);
(iv) Identifizieren der Ofenkammer mit der kürzesten erwarteten Zeit als die gewünschte Ofenkammer (Fig. 6) und
(v) Steuern der Kommunikationsanordnung zum Übermitteln der Identität der gewünschten Ofenkammer (124, 128, 132, 134, 138, 142, 144) an die Bedienkraft; und
d. die Kommunikationsanordnung konfiguriert ist zum Übermitteln der Identität der gewünschten Ofenkammer an die Bedienkraft.

2. System nach Anspruch 1, wobei:
(i) die Kommunikationsanordnung eine Benutzerschnittstelle (50) enthält;
(ii) der Prozessor (36) konfiguriert ist zur Identifizierung der nächsten verfügbaren Ofenkammer als Reaktion auf eine von der Bedienkraft über die Benutzerschnittstelle (50) eingegebene Eingabe; und
(iii) der Prozessor (36) die gewünschte Ofenkammerbedingung anhand der Eingabe der Bedienkraft ermittelt.

3. System nach Anspruch 1 oder 2, wobei die Benutzerschnittstelle eine Anzeige enthält.

4. System nach Anspruch 3, wobei die Anzeige zusätzlich zum Anzeigen der Angabe der identifizierten Ofenkammer auch andere Informationen in Bezug auf die aktuelle Bedingung und/oder Nutzung von jeder der Ofenkammern anzeigt.

5. System nach Anspruch 1 oder 2, wobei die dem Prozessor bereitgestellten Informationen über eine oder mehr aktuelle Bedingungen von jeder der Ofenkammern wenigstens eine Variable enthalten, die aus der Gruppe ausgewählt ist, welche Folgendes enthält: die aktuelle Ofenkammertemperatur von jeder der Ofenkammern, ob Dampf angewendet wird, die Feuchtigkeit von jeder der Ofenkammern und ob die Heizelemente aktiviert sind.

6. System nach Anspruch 5, wobei die eine oder mehr aktuellen Bedingungen von jeder der Ofenkammern die aktuelle Ofenkammertemperatur jeder Ofenkammer sind und die gewünschte Ofenkammerbedingung die vom Prozessor ermittelte gewünschte Ofenkammertemperatur sind.

7. System nach Anspruch 2, wobei die Eingabe der Bedienkraft eine Angabe eines zu backenden Produkttyps ist und der Prozessor zum Ermitteln der gewünschten Ofenkammerbedingung auf Basis des Produkttyps konfiguriert ist.

8. System nach Anspruch 7, wobei der Prozessor eine Lookup-Tabelle mit dem zu backenden Produkttyp entsprechenden Informationen über die gewünschten Ofenbedingungen hat und zur Verwendung der Lookup-Tabelle zur Ermittlung der gewünschten Ofenkammerbedingungen konfiguriert ist.

9. System nach Anspruch 1, das ferner einen Indikator zum Anzeigen, wenn die identifizierte Ofenkammer in der gewünschten Ofenkammerbedingung ist, aufweist.

10. Verfahren zum Betreiben mehrerer Ofenkammern, das die folgenden Schritte aufweist:
(i) Ermitteln einer gewünschten Ofenkammerbedingung für ein zu backendes Produkt auf Basis von von einer Bedienkraft erhaltenen Informationen;
(ii) Ermitteln der aktuellen Bedingung jeder Ofenkammer und der Zeit, zu der die aktuelle Nutzung jeder Ofenkammer abgeschlossen ist;
(iii) für jede Ofenkammer Ermitteln einer erwarteten Zeit zum Erreichen der gewünschten Ofenkammerbedingung, sobald die aktuelle Nutzung der Ofenkammer abgeschlossen ist, wobei die erwartete Zeit die Summe der Zeit, bis die Ofenkammer die aktuelle Nutzung abgeschlossen hat, und der zum Ändern der Ofenkammerbedingungen auf den gewünschten Ofen, sobald die aktuelle Nutzung abgeschlossen ist, benötigten Zeit;
(iv) Identifizieren der Ofenkammer mit der kürzesten erwarteten Zeit als die gewünschte Ofenkammer; und
(v) Übermitteln der Identität der gewünschten Ofenkammer an die Bedienkraft.
d. die Kommunikationsanordnung konfiguriert ist zum Übermitteln der Identität der gewünschten Ofenkammer an die Bedienkraft.

## Revendications

1. Système de surveillance et d'assistance pour une pluralité de chambres de cuisson (12, 14, 16, 18) lors de l'utilisation, comprenant :
a. un processeur (36) ;
b. une connexion (20, 22, 24, 26) servant à connecter au niveau du processeur (36) à la pluralité de chambres de cuisson pour fournir des informations au processeur qui indiquent une ou plusieurs conditions en cours de chacune des chambres de cuisson et la durée au bout de laquelle l'utilisation en cours de chacune des chambres de cuisson est terminée ; et
c. un dispositif de communication (32) accouplé au processeur ;
**caractérisé en ce que** :
1 le processeur (36) est configuré pour :
(i) déterminer une condition souhaitée de la chambre de cuisson pour un produit à cuire en fonction des informations reçues en provenance d'un opérateur ;
(ii) déterminer la condition en cours de chaque chambre de cuisson et la durée au bout de laquelle l'utilisation en cours de chaque chambre de cuisson est terminée ;
(iii) déterminer pour chaque chambre de cuisson, une durée prévue pour atteindre la condition souhaitée de la chambre de cuisson une fois que l'utilisation en cours de la chambre de cuisson est terminée (106, 114, 126, 136), la durée prévue étant la somme de la durée au bout de laquelle la chambre de cuisson termine l'utilisation en cours et la durée nécessaire pour changer les conditions de la chambre de cuisson dans le four souhaité une fois que l'utilisation en cours est terminée (116, 120, 130, 140) ;
(iv) identifier la chambre de cuisson ayant la durée prévue la plus courte comme étant la chambre de cuisson souhaitée ; (figure 6) et
(v) commander le dispositif de communication pour communiquer l'identité de la chambre de cuisson souhaitée (124, 128, 132, 134, 138, 142, 144) à l'opérateur, et
d. le dispositif de communication est configuré pour communiquer l'identité de la chambre de cuisson souhaitée à l'opérateur.

2. Système selon la revendication 1, dans lequel :
(i) le dispositif de communication comprend une interface utilisateur (50) ;
(ii) le processeur (36) étant configuré pour effectuer l'identification de la prochaine chambre de cuisson disponible en réponse à une entrée de l'opérateur saisie par le biais de l'interface utilisateur (50) ; et
(iii) le processeur (36) détermine la condition de chambre de cuisson souhaitée à partir de l'entrée de l'opérateur.

3. Système selon la revendication 1 ou la revendication 2, dans lequel l'interface utilisateur comprend un affichage.

4. Système selon la revendication 3, dans lequel, en plus de l'affichage de l'indication de la chambre de cuisson identifiée, l'affichage affiche aussi d'autres informations concernant la condition en cours et/ou l'utilisation de chacune des chambres de cuisson.

5. Système selon la revendication 1 ou la revendication 2, dans lequel les informations d'une ou de plusieurs conditions en cours de chacune des chambres de cuisson fournies au processeur comprennent au moins une variable sélectionnée dans le groupe comprenant la température en cours de la chambre de cuisson de chacune des chambres de cuisson, l'application ou non de vapeur, l'humidité de chacune des chambres de cuisson, et l'activation ou non des éléments de chauffage.

6. Système selon la revendication 5, dans lequel lesdites une ou plusieurs conditions en cours de chacune des chambres de cuisson sont la température en cours de la chambre de cuisson de chaque chambre de cuisson et la condition souhaitée de la chambre de cuisson est la température souhaitée de la chambre de cuisson comme le détermine le processeur.

7. Système selon la revendication 2, dans lequel l'entrée de l'opérateur comprend une indication d'un type de produit à cuire et le processeur est configuré pour déterminer la condition souhaitée de la chambre de cuisson en fonction du type de produit.

8. Système selon la revendication 7, dans lequel le processeur a une table de consultation d'informations des conditions souhaitées du four correspondant au type de produit à cuire et est configuré pour utiliser la table de consultation pour déterminer les conditions souhaitées des chambres de cuisson.

9. Système selon la revendication 1, comportant par ailleurs un indicateur servant à afficher quand la chambre de cuisson identifiée est à la condition souhaitée de la chambre de cuisson.

10. Procédé de fonctionnement d'une pluralité de chambres de cuisson comportant les étapes consistant à :
(i) déterminer une condition souhaitée de la chambre de cuisson pour un produit à cuire en fonction des informations reçues en provenance d'un opérateur ;
(ii) déterminer la condition en cours de chaque chambre de cuisson et la durée au bout de laquelle l'utilisation en cours de chaque chambre de cuisson est terminée ;
(iii) déterminer pour chaque chambre de cuisson, une durée prévue pour atteindre la condition souhaitée de la chambre de cuisson une fois que l'utilisation en cours de la chambre de cuisson est terminée, la durée prévue étant la somme de la durée au bout de laquelle la chambre de cuisson termine l'utilisation en cours, et la durée nécessaire pour changer les conditions du four dans le four souhaité une fois que l'utilisation en cours est terminée ;
(iv) identifier la chambre de cuisson ayant la durée prévue la plus courte comme étant la chambre de cuisson souhaitée ; et
(v) communiquer l'identité de la chambre de cuisson souhaitée à l'opérateur.
